Europäisches Patentamt

European Patent Office

Office européen des brevets

(11) Publication number: **0 244 157**
**A2**

# (12) EUROPEAN PATENT APPLICATION

(21) Application number: **87303570.3**

(22) Date of filing: **23.04.87**

(51) Int. Cl.⁴: **A 23 J 1/02**
**A 23 J 3/00**

(30) Priority: **24.04.86 GB 8609973**
**24.04.86 GB 8609974**

(43) Date of publication of application:
**04.11.87 Bulletin 87/45**

(84) Designated Contracting States:
**AT BE CH DE ES FR GB GR IT Li LU NL SE**

(71) Applicant: **Atteck, Louis Augustus George**
**39 St. Pauls Avenue**
**Kenton Harrow Middlesex HA3 9PR (GB)**

(72) Inventor: **Atteck, Louis Augustus George**
**39 St. Pauls Avenue**
**Kenton Harrow Middlesex HA3 9PR (GB)**

(74) Representative: **Gura, Henry Alan et al**
**MEWBURN ELLIS & CO. 2/3 Cursitor Street**
**London EC4A 1BQ (GB)**

(54) Meat protein processes and products.

(57) Actin and myosin is extracted from pre-rigor muscle using a brine solution containing salt at between 3% and 18% by weight, and optionally food phosphates at 0.05% to 2 wt. %. Comminuted or chopped pre-rigor meat is mixed with the brine in a ratio between 2:1 and 4:1 to yield a slurry or paste-like mixture. The temperature is maintained below 30°C to prevent the proteins denaturing. The slurry is stored in the absence of oxygen at 0°C or dried e.g. by drum drying to a particulate material which can be kept at room temperature under anoxic conditions. On heating above 50°C the protein product gels and by its presence in a meat product during cooking it provides good water holding properties and good binding properties. When used in processed meat products it can improve both succulence and organoleptic properties.

EP 0 244 157 A2

**Description**

## MEAT PROTEIN PROCESSES AND PRODUCTS

This invention relates to methods for treating pre-rigor meat to obtain useful protein products therefrom, to the preparation of products from such extracts, and to products containing pre-rigor meat material.

In EP 0064104 there is described a process for the production of a soluble protein product by treating comminuted or chopped pre-rigor meat while in a saline solution to dissolve at least part of the protein in the solution and then removing water from the solution, in the process the material being maintained throughout these stages at a temperature not more than 40°C, to obtain a concentrated product which is soluble and which is capable of gelling at 50°C when heated in aqueous solution. It is explained in that earlier patent how the products obtained have a number of properties that make them useful for meat recipes and formulations. In the processes the patent describes, it is indicated that there is a lower limit to the ratio of brine to meat below which the viscosity of the mixture increases undesirably. Accordingly, it is recommended that the ratio of brine to meat should not be less than 2:1. Such a limitation, together with the fact that the brine concentration must be maintained above a certain minimum level, leads to the result that the final product has a relatively high ratio of salt to soluble protein. This is a disadvantage that restricts the proportion of the product in a foodstuff prepared with it because the foodstuff will otherwise be unpalatable, especially if the other ingredients include salt. The binding effect obtained by the product may therefore also be restricted since this depends on the proportion of the product in the foodstuff.

In the processes of the present invention, a method of preparation of a soluble, gellable product from pre-rigor meat is provided which allows the preparation of materials with a smaller salt content than those described in the earlier patent, so as to yield products with significantly wider application.

According to one aspect of the invention, there is provided a process for the production of a soluble protein material wherein pre-rigor muscle is chopped or comminuted in a saline solution to dissolve lean meat protein into the solution, the ratio of the meat muscle to saline solution being between 2:1 and 4:1 by weight and the salt content of the brine being between 3% and 18% by weight, to yield a slurry or paste-like product with a salt concentration between 1% and 6% by weight, the temperature of the water-soluble protein material being restricted substantially throughout the process to less than 30°C, and preferably not more than 20-25°C. For red meats and poultry the preferred salt content of the brine lies between 3% and 15wt.%, yielding a mixture with a maximum salt concentration of about 5wt.%. For fish meat a high salt content, in the range 4% to 18wt.% will be preferred.

According to another aspect of the invention, there is provided a soluble protein material produced from pre-rigor meat muscle having a salt concentration not substantially greater than 35% of the dry weight of the product, preferably not more than 15%.

By means of the process according to the invention, a viscous slurry is obtained in which the salt content is substantially less than that disclosed in the earlier patent. It is possible to reduce the salt content still further by including food phosphates in the saline solution. In this respect, although it is possible to include up to about 2wt.% of food phosphates, it is desirable to limit the amount to not more than 0.5wt.%. A preferred level is in the range 0.05-0.2wt.%. E.g. 0.16wt.% will allow the salt content to be reduced by 1-2wt.% from the higher levels proposed, although the reduction is much less at lower salt levels.

The salt content of the saline solution may be between 4-12wt.%, preferably 6-10wt.%. In an advantageous example, the initial salt content of the brine is 8-9wt. % and the ratio of pre-rigor lean meat to brine is 3:1, giving a final salt concentration of about 2.5%. This is equivalent to a salt content of about 12% of the dry weight of the product on the basis that meat contains some 25% solids.

As will be apparent from some of the examples given below, the slurry-form product can be used directly in many instances. If it is to be held for use later, it can be frozen. However, there can be problems in maintaining its freshness and its efficacy as a binder material over very long periods. For long-term storage a particulate product would be preferable, although for many of the applications described below the particulate will be reconstituted with water into a semi-liquid or paste-like material. The high viscosity of the product means it cannot be spray dried, but moisture can be removed by other known processes, such as in a drum drier, while observing the need to maintain a temperature not greater than 25-35°C at the drum surface or else the soluble protein will denature at the surface.

It has been found that limitation of the measured temperature of the mixture in carrying out a process according to the invention is an important factor in obtaining a product with maximum functional qualities. Unlike the previously known process referred to above, if the measured temperature is allowed to rise nearer to the gelling temperature, an increasing loss of the functional properties of the product is observed. It may be that the high viscosity of the slurry inhibits the dissipation of heat through the mix so that denaturing of the protein occurs at local hot spots, e.g. at the cutting surfaces of the chopper blades.

Before a more detailed description of the invention, it should be explained that "pre-rigor" is a term used to denote meat which is still warm and has not gone into rigor mortis. Between death and the onset of rigor mortis changes occur in animal muscle associated with the chemical and physiological reactions in the muscle after stunning and/or exsanguination, which can be divided into three phases:

(a) aerobic processes for the resynthesis of ATP from creatine phosphate, which take place immediately to maintain vital functions when the blood ceases to flow and which can concurrently occur with -

(b) aerobic glycolysis using oxygen from myoglobin or blood to resynthesize ATP from glycogen or glucose;

(c) anaerobic glycolysis during which glycogen is converted to lactic acid to synthesize ATP. The pH is fairly steady during the first two phases but falls rapidly during the anaerobic phase to the level found in post-rigor meat. The average time limits before start of rigor can vary with the species, e.g for pork about 40-60 minutes and for beef 2-4 hours. In the processes of the present invention, we are concerned essentially with meat muscle in phases (a) and (b) but can use meat in the early stages of (c). As phase (c) proceeds inclusion of phosphate in the brine enhances the solubility of the actomyosin being formed as rigor starts.

Specific examples of the processes and products of the present invention will now be described by way of example.

## EXTRACT OF MEAT PROTEIN

Pre-rigor meat was boned out while still in the aerobic phase. Visible fat and gristle were trimmed off and the meat was finely comminuted in a 60 litre bowl chopper with a shaft speed of up to about 5000 rpm. (A larger capacity machine would be run at a lower shaft speed to give an approximate equivalent peripheral blade speed). It is preferred to use a machine having at least six blades to get faster comminution.

Brine at a temperature between freezing point and 10°C, preferably about 0°C, and containing between 4wt.% and 15wt.% salt, with optionally 0.13 to 0.16wt.% of food phosphate, is added quickly to the meat and mixed at high speed to produce a thick, translucent, gelatinous product containing myosin and actin dissolved from the meat. The temperature of the mix is kept below 30°C and preferably not more than 20-25°C.

Preferably the meat is processed within 30 minutes of slaughter but this time limit depends upon the rate at which the species of meat enters the anaerobic phase. In addition, the less the time from slaughter the less the need for phosphates and the smaller the amounts of such additives to be included. However, if food phosphates are used the salt concentration can be reduced by about 10%.

The amount of brine added will affect the viscosity of the product. Both salt content and volume of brine added to the meat can be adjusted to suit the application for which the material is being prepared and for palatability in the final meat product produced using the material. Generally speaking it is not desirable to have a salt content greater than 1.5% in the final product.

In one particular example, three parts of pre-rigor lean meat and one part of brine at 0°C and containing 8.4wt.% salt were mixed together. The meat was placed in the bowl chopper first and the shaft speed raised from a slow speed to the maximum of 5000 rpm and held for 2-3 rvolutions of the bowl. The brine was added quickly to the finely chopped meat to achieve a good mix. Comminuting and mixing was continued until a homogenous mix with a translucent appearance and soap-like feel was produced. The process took about 2 minutes and the temperature of the mix was kept below 25°C. The product was then packaged in oxygen-impermeable bags (e.g. of Cryovac made by Grace) to prevent metmyoglobin formation. This mix is suitable for use in all the subsequent processes described below which require the product in a liquid or paste-like form.

The product can alternatively be dried using a drum drier to extract most of the water and form a particulate material having a moisture content preferably not more than 5%, the drum surface temperature being maintained below 35°C throughout this process. The particulate product is preferably stored in an environment of carbon dioxide or inert gas and can be kept at room temperature. The water-containing product must be stored at low temperature - e.g. at 0°C - or it can be frozen for long-term storage.

Both the liquid product and the particulate can be used to replace lean meat in processed meat products as a binder and emulsifier with excellent water-holding capacity, so improving succulence and the organoleptic properties of the processed products. The following gives some examples:

## SAUSAGE CASINGS

The product in a pasty but fluent form can be extruded to make a sausage casing. Conventional extrusion apparatus can be used to form the casing, e.g. of the type comprising a nozzle head with an annular orifice provided by concentric tubes which counter-rotate to align the structure of the material. Air is blown through the inner tube to support the material as it is extruded into a coagulating bath, such as an edible acid bath containing lactic acid or acetic acid which precipitates the material to form a skin or casing. The casing is then washed, dried and shirred.

It is also possible to extrude a comminuted sausage filling through the inner tube concurrently with the casing material, so that the filling itself supports the product until it forms a skin. This composite can be twisted at intervals along its length to form a string of cased sausages at any stage of the procedure when the strength of the skin allows safe handling.

A fibrous strengthening material such as collagen or non-meat protein fibres can be mixed with the product to give a stronger oriented composite casing with the soluble protein acting as a cross-linking agent for the fibres.

## EXTRUDABLE MEAT MIX

This is an example of meat mix, using the product, that can be extruded directly into a frying pan or other cooking utensil. The mix can comprise conventional components, i.e. chopped or minced meat, rusk, rice flour and fat complemented by the protein product. The fat is preferably treated to make it hydrophilic. To this end it is minced or cut into small pieces and placed in water at about 60°C to melt away the free fat on their surfaces. Fat pieces are formed encapsulated in outer connective membrane and the pieces are separated from the water and liquid fat by sieving or certrifuging.

To prepare the mix the meat is mixed with the protein product, to be followed by the cooled fat particles and other ingredients, the temperature at all times before cooking of course being maintained below the already indicated maximum. Ingredients such as rice flour and rusk determine the rheology of the mix before cooking while the protein product acts as a lubricant at this stage.

The mix can be dispensed from a container having a hole or nozzle through which it can be squeezed out. The container can conveniently be a flexible tube with a conical tip which can be severed to form a nozzle of the desired size.

When extruded into the heated cooking utensil the soluble protein on the surface of the mix forms a skin of denatured protein to maintain the shape of the extrusion. The denaturing continues inwards to form a matrix which holds the mix together and retains water giving the final product succulence. Any free water is absorbed by the rice flour which then gelatinises. The fat particles give off little or no liquid during cooking since they have been defatted on their surfaces.

It is also possible to use fine-ground Frankfurter-type meat compositions in a mix with the protein product, for extrusion as already described. In all cases the mix may be made stiff enough to be preformed before cooking.

## ADHESION OF PIECES OF MEAT

The product in a paste-like form is also useful for adhering together pieces of meat, whether fresh pieces which hitherto it has not been commercially possible to bind without using non-meat binders such as albumin, or cured pieces such as hams or silverside of beef.

In known methods for adhering together cured pieces of meat, the pieces must be tumbled or massaged for long periods and the brine must have high salt and phosphate levels. Because of this the meat loses the fibrous texture that is experienced when masticating real meat or traditional hams. Use of the product of the present inventioin means that the meat does not need to be worked to an extent that affects this quality. Furthermore, the product functions as a binder which allows the phosphates in the cured meat to be reduced or even omitted. This is significant since regulations often require phosphates to be declared as an additive. Hitherto phosphates have been necessary in conjunction with extended tumbling and massaging to achieve adequate binding.

Applied to pieces of fresh meat, the bonding material described can provide a roasting joint which, after cooking, can be sliced thinly, the meat in the slices being held together by the denatured product to give a slice similar to that from a single piece of meat. Since the protein product seals the outer surface of the joint it will retain more water on cooking to enhance succulence.

If the meat is tough, or as a precaution to limit differential shrinkage during cooking, the pieces can be tenerised before coating by piercing them with spear-like members which cut the collagenous connective tissues into shorter lengths. Alternatively, the pieces are tumbled or mixed vigorously to loosen the connective tissues before introducing the protein product.

In one application the meat to be processed is trimmed of fat and cut up before being stirred about in a mixer for a short time to dry the exposed surfaces. 5-10% by weight of the protein product is then added in the form of a thick paste. The mixture is mixed for 5-15 minutes to coat the pieces uniformly with the product. The mixture should then be packaged because an equilibrating process will begin, in which the brine diffuses into the meat and the soluble proteins in the product precipitate. These changes should occur as far as possible after the mixture is packed to avoid weakening the bond that will be formed between the pieces on cooking.

Since carcase fat is encapsulated in an envelope of connective tissue, if the protein product is rubbed onto cut fat surfaces it will emulsify the free fat and adhere to the hydrophilic envelope material thus enabling lean and fat pieces of meat to be bonded together. Larger areas of fat can be pre-treated, as already described, to remove free fat before applying the protein product.

As the meat pieces will not be bonded together until denaturing of the protein product during cooking, it is preferred to package the mix under pressure to restrain it and possibly to provide a heat-resistant packaging in which the meat can be cooked. Resilient clamps or cages can be used to maintain the pressure when the product shrinks as it loses juices during cooking. Alternatively the mixture can be filled into a fibrous casing, or packed in an elasticated net, possibly after putting it in a roast-proof casing to prevent adhesion of the net to the meat.

Care must be taken to avoid inclusion of air between the pieces of meat which would interfere with the bonding; a packaging which maintains pressure can help to do this.

In another method, the mixture is pumped into a shirred casing and is then frozen quickly to be cut into suitable size steaks or joints for sale to the consumer. These joints can be thawed out and roasted in the conventional manner, while the steaks can be fried or grilled from the frozen state. Battered and breaded products can be made and flash-fried to set the batter and to partially heat-set the protein product to bind the meat pieces together. These foodstuffs can be frozen or sold from chill.

Fresh foodstuffs can be packed initially in a non-elastic heat-resistant casing so that roasts can be cut to length for the consumer. The cut roast may then be packaged in a rigid container, or it can be placed in a shaped thermo-formed packaging of oven-resistant plastics, such as polyester. Cook-in packaging may have drain holes for juices produced during cooking. If large joints of meat are formed with effectively the entire surface of the joint sealed, fine skewers may be inserted to enable the juices in the centre to run out without creating pressures that might break the bonding of the pieces.

If large pieces of meat are to be adhered together, differences of shrinkage and distortion during cooking could lead to shearing of the bond between the pieces allowing them to fall apart on slicing. It is then particularly important to constrain the meat from moving by the use of a mould or otherwise applying pressure during cooking.

In the case of uncured meats sold to the consumer, as a fresh rolled roast joint or a joint pieced together from a few large pieces of meat, the surfaces may be coated and preferably well rubbed with the paste-like protein product and packed together as already described. The method of appliction of the material can be similar to the previously described method if outside appearance is not important, since it will be applied over the whole surface of the foodstuff.

In the example of the preparation of a boneless leg cut of lamb, the pieces are tunnel-boned, turned inside out and trimmed of all fat and gristle. The protein product is rubbed on the meat, or the meat is mixed together with the product, the aim being to key this material to the surface to achieve good adhesion. The boned joint is then turned back to its original form and packed to hold it under pressure.

In some applications the packaged meat can be pre-heated to about 55-60°C in the factory to set the protein product and make the joint stiffer and more easily handled.

In all the examples described, the pieced-together meat is preferably held for some hours before cooking to allow equilibration to take place between the protein product and the meat pieces.

This piecing-together method can also be used to upgrade meats, e.g. by adhering together layers of meat suitable only for grinding to enable it to be diced and for adhering dicing-quality meat to be sliced. In this case there is adhesion of fat to fat and fat to lean.

## DRY MEAT MIX

In this application of products according to the invention, they can be employed to produce long-life foodstuffs which are stable at room temperature.

One example comprises dry particulate meat, e.g. minced or ground, and the protein product as a powder or particulate. The meat can be prepared by mincing and then drying in hot air or on a fluidised bed. The meat is preferably cooked either before or after mincing to prevent the particles from clumping together while drying. The dry meat particles, rusk, seasoning and powder product (e.g. in the ratio dry meat to powder of 5:1) are dry-mixed and packaged, preferably under carbon dioxide or inert gas to protect against fat oxidation and flavour deterioration. The water content of the mix should not be greater than 3-4% in order to preserve the functional qualities of the protein product and to prevent bacterial or mould growth.

The preferred ratio of dry meat to protein product lies between 9:1 and 4:1. The higher the proportion of the product, the greater is the binding power and the succulence of the foodstuff. In general the fianl salt content determines the ratio in order to produce an acceptable end product.

In use, water is added to the mix which is then allowed to stand until the water is absorbed and equilibrated throughout the mixture. The mixture can be shaped into burgers, for example, and then cooked. In an alternative method, the particulate can be packed alone, or possibly with seasonings and/or rusk, for the consumer to mix with fresh meat as required.

## COMMINUTED MEAT PRODUCTS

Burger-type mixes can also be prepared using a mixture in which the thick product described above is added to pre-cooked minced or ground meat. The mix will usually be relatively soft and pliable but the cooked meat particle shape is able to resist deformation during mixing and forming of the foodstuff and the particles are bound together by the heat-settable product when the foodstuff is cooked.

The meat may be pre-cooked in any medium, but preferably a polyunsaturated oil such as corn oil is used. This results in some of the saturated fat of the meat being rendered out while some of the oil is absorbed into the meat.

In more detail, lean meat, preferably trimmed of visible fat, is minced or ground to a desired particle size. For a standard beefburger a 3-5mm mincing plate may be used. It is preferably minced directly into a heating vessel containing hot corn oil, the temperature being determined by the amount of water to be removed from the meat. In one example, the oil was heated to 80°C and beef at 0°C was minced into the oil while stirring. The heated oil when mixed with the cold mince fall to a temperature of approximately 65°C. This temperature was maintained for 1-2 minutes and the oil and cooked meat particles were then separated by sieving. The cooked particles were drained and chilled to a temperature of about 0°C until further processing. Using beef consisting of 90% visual lean meat and cooking in corn oil in the ratio oil:meat of 1:4 by weight, in relation to its original weight the cooked meat had lost 24% water and 5% fat and had picked up 7% oil.

Oil from the cooking process can be recovered if the animal fat it has taken up is separated out by cooling sufficiently to solidify it so that it can be removed by methods such as centrifuging or filtering. The oil can be re-used until the animal fat content becomes so high that it affects the defatting process.

In a continuous process, the meat is minced directly into a continuous heating system comprising a trough through which the heated oil flows and exits with the cooked meat onto a sieve belt where the oil is separated and is drawn by a pump through a heating reservoir to be recycled through the trough. The heating temperature and pumping rate are adjusted to maintain the oil temperature at exit from the trough to a predetermined range dependent on the required water loss from the meat. As an example, with an oil exit temperature of 65°C and a time of passage of the meat through the trough of about 1 minute, there was a 24% water loss from the meat. The mincing process preferably provides a continuous feed of the meat at a fixed temperature to achieve the chosen oil temperature. Figures for the saturated oil loss and unsaturated oil pick-up are similar to those in the batch process previously described. The process can be stopped from time to time when it is required to remove animal fat from the cooking oil.

It is also possible to use water as the cooking medium. The water will also take up solubilised protein from the meat in denatured form, which can be recovered in due course. In one experiment using water, 100 lbs of minced or ground meat and 75 lbs of water heated to an initial temperature of 70°C underwent a fall to 45°C when the mince was added and the temperature of the mix was then raised to 65° and held for 1-2 minutes while stirring, before decanting onto a sieve. The starting material had a ratio of 85:15 lean beef to fat and after cooking recorded a water loss of about 21% and a fat loss of 5-6%.

If the pre-cooking process for the meat is controlled so that the water loss from the meat is balanced by the water contained in the protein product, it is possible to obtain a foodstuff which has effectively a 100% meat content - that is to say the meat protein content is the same as that of normal fresh meat. It is a feature of the process that even if seasonings such as onions are used, the water content can be adjusted to maintain the 100% meat content. This is not possible with conventional methods of preparation of comminuted meat products that contain such seasonings. As an example of 100% meat content burger, cooked minced beef prepared as already described was prepared with a water loss of 24%. Added to this was the protein product containing the equivalent of 67% lean beef meat, 29% water, the remainder salt. This was added in the ratio meat:product of 3:2.

The ingredients for the burger are simply mixed together: the mix is relatively soft and easily moulded. Since the cooked meat particles are not easily broken by this process is not critical and problems that arise in conventional mixes are avoided.

The mixture can be kept chilled or can be quick-frozen. After a period of time at low chill temperatures the texture stiffens a little but it remains soft enough to handle easily. Preferably it is sold to the consumer in the frozen state.

If a burger mix is required to have the colour of fresh red meat, the meat is minced partially frozen at -2° to -3°C to the required size and held at this temperature to give a reasonably flowable material. It is held at about -3° to -4°C to keep it tempered but not defrosted. The protein product is held in the same temperature range but because of its salt content will not freeze. Mixing and forming can be performed with conventional machinery which is held at the same temperature regime. On mixing, the frozen meat particles will be slightly melted at the points of contact with the fluid product, so causing the mix to be bound together by the product. The foodstuff is then frozen or held chilled until used. On cooking, the product gels and binds the particulate material together firmly to give a foodstuff with succulence contributed by both the protein product and the meat. The minced meat is in fact a passive component in the mixture, although its tenderness is an important factor, and the product controls the heat-binding and organoleptic qualities such as texture and mouth feel in the final, cooked product.

It is to be noted that with this process using pre-cooked meat, a high standard of succulence can be achieved despite a low overall fat content. There is the advantage, moreover, that the fat content can be partially provided by polyunsaturated fats, with consequent nutritional and health benefits. Additional fats of both kinds can be incorporated, if required, and can be emulsified in the protein product before adding the resulting emulsion to the paticulate material. As a result, it is possible to obtain a burger-type foodstuff of reproducible, controlled texture and succulence, with the inclusion of polyunsaturated fats, and to achieve the equivalent of a 100% meat content even though flavouring ingredients may be included.

It is also within the scope of the present invention to prepare protein products with similar functional qualities from the meat of fish and other marine life which has muscle containing actin and myosin, for example crustacea or molluscs. There is much greater variety in the rate at which different species of sea creatures go into rigor mortis than is the case for red meat. The onset of death, by oxygen starvation in air, tends to increase the rate at which rigor mortis sets in. It is therefore recommended in these cases to use food phosphates, preferably in the range 0.05 to 0.2wt.% and a salt concentration about 20% higher than that required for red meats, i.e. in the range 4-18wt.% in the brine, to give a maximum of 6% salt concentration in the product.

**Claims**

1. A process for the production of a soluble protein material wherein pre-rigor muscle is chopped or comminuted in a saline solution to dissolve lean meat protein into the solution, characterised in that the ratio of the meat muscle to saline solution is between 2:1 and 4:1 by weight, the salt concentration of the brine is between 3% and 18% by weight, and the temperature of the water-soluble protein material is restricted substantially throughout the process to less than 30°C whereby the process yields a slurry or paste-like extract with a salt concentration between 1% and 6% by weight.

2. A process according to claim 1 wherein said temperature is limited to not more than 20-25°C.

3. A process according to claim 1 or claim 2 wherein the saline solution includes food phosphates in a concentration of between 0.05% and 2% by weight.

4. A process according to claim 3 wherein the salt content of the saline solution is between 4% and 12wt.% preferably 6%-10wt.%.

5. A process according to any one of the preceding claims wherein the salt content of the saline solution is 8-9wt.% and the ratio by weight of pre-rigor lean meat to brine is substantially 3:1.

6. A process according to any one of claims 1 to 5 wherein the extract is dried in contact with a heating medium at a temperature not exceeding 35°C, to provide a particulate product.

7. A method of use of an extract produced in accordance with any one of claims 1 to 6 wherein the extract in a viscous but fluent form is extruded through an annular orifice into a coagulating bath while applying internal pressure to maintain a tubular shape, whereby to form the extract into a sausage casing.

8. A method according to claim 7 wherein a filling is co-extruded simultaneously into the interior of the extract extrusion to form a sausage therewith.

9. A method according to claim 7 or claim 8 wherein fibrous material is mixed with said extract prior to extrusion.

10. A method of use of an extract produced according to any one of claims 1 to 6 wherein the extract is mixed with ground or minced meat.

11. A method according to claim 10 wherein the mixing takes place at substantially -3 to -4°C.

12. A method according to claim 10 or claim 11 wherein the meat contains fatty tissue from which free fat has been removed before the mixing.

13. A method of use of an extract produced according to any one of claims 1 to 6 wherein the product in a paste-like form is coated on pieces of meat and the coated pieces are held together prior to denaturing of the extract to bond the pieces together.

14. A method of use of an extract produced according to any one of claims 1 to 6 wherein the extract in a paste-like form is mixed with minced or ground meat which has been pre-cooked to remove some of its water content.

15. A method according to claim 14 wherein water is removed in said pre-cooked to the extent of at least substantially 20% of the weight of the meat before cooking.

16. A method according to claim 14 or claim 15 wherein the meat is cooked in polyunsaturated oil which partially replaces carcase fat in the meat.

17. A method according to any one of claims 14 to 16 wherein the cooking temperature is in the range of 65° to 70°C.

18. A method according to any one of claims 14 to 17 wherein the pre-cooked meat is cooled before mixing and the mixing carried out at a temperature not substantially more than 0°C.

19. A method according to any one of claims 14 to 18 wherein the proportions of extract and pre-cooked meat are controlled to give an equivalent fresh meat content not substantially less than 100% in the mixture.

20. A soluble protein product produced from pre-rigor meat muscle which is characterised in that it has a salt concentration not substantially greater than 35% of the dry weight of the material, preferably not substantially more than 15%.

21. A food product comprising an extract according to claim 20 in the form of a sausage casing.

22. A food product comprising pieces of meat coated with a paste-like extract according to claim 20 and contained in packaging which holds the pieces with their coated surfaces in contact with each other.

23. A dry meat mix comprising an extract according to claim 20 in particulate form and dry particulate meat, the ratio of dry meat to extract being substantially between 9:1 and 4:1.

24. A package comprising a deformable container having a nozzle or means for forming a nozzle and filled with a mixture of ground or minced meat and an extract according to claim 20, said mixture being of a consistency to be extruded through said nozzle by applying pressure to the container to provide a formed meat product for cooking.

25. A food product comprising a mixture of pre-cooked minced or ground meat and an extract according to claim 20 and preferably having a meat content equivalent not substantially less than 100%.

26. A food product according to claim 25 wherein fat in the minced or ground meat has been partially replaced by polyunsaturated oil.